# EUROPEAN PATENT APPLICATION

(11) **EP 2 574 955 A1**
(43) Date of publication of application: **03.04.2013**
(21) Application number: 11460049.7
(22) Date of filing: 27.09.2011
(51) Int. Cl.: G01S 7/00, G01S 17/87, G01S 17/93, G08G 3/00

(54) **Positioning system for vessels manoevring in port basin and internal channels**

(71) Applicant: Akademia Morska W Szczecinie, 70-500 Szczecin (PL)
(72) Inventor: Gucma Lucjan, 72-003 Dobra (PL); Gucma Maciej, 71-042 Szczecin (PL)
(74) Representative: Kachnic, Tadeusz

(57) **Abstract**

The positioning system for sea vessels manoeuvring in port basin and internal channels is disclosed.

The system contains land subsystem, that comprise of stationary located along shores and towards water at least three laser heads /1/, /2/, /3/, for measuring distance of vessel /5/ both waterlines /6/ from shores, working in continuous system with frequency of approx. 50 Hz, whereas vessel /5/ waterline /6/ from the side of the jetty, the vessel /5/ intend to dock to, have to be in range of at least two laser heads /1/ and /2/, and the vessel opposite waterline /6/ is at least in range of one of the laser head /3/, next land subsystem elements are: data transmission module /10/, main unit /11/, supply box /12/ and interface /13/, and vessel subsystem contains data reception module /14/ main unit /15/ user interface /16/ and supply box /17/, whereas third subsystem is wireless transmission system, with dynamically allocated time lines for data transmission from particular laser heads /1/, /2/, and /3/.

## Description

The positioning system for sea vessels manoeuvring in port basin and internal channels is disclosed.

The manoeuvring vessel at restricted waters requires very precise information at its position in three dimensions (x, y, course). Accuracy required from precise port navigation is minimum 0,1m location error (Mean Squared Error) and 1° of the course. Presently applied systems do not guarantee such precision in entire port scale, port approach fairway, waterway, ect. Moreover the vessel speed approach to hydro technical objects - for example during mooring - is significant parameter, that decides about possibility of destroying such object, due to enormous vessel mass. The Capitan or docking pilot estimate the speed visually, as they have no general system determining such speed.

Currently marine positioning systems are completely dominated by the GPS. Despite enormous efforts of international organisations, including IMO resulting from necessity of ensuring redundant systems there are solutions for such systems especially acing comprehensively and on large areas.

Known laser navigation systems are mainly used in two fields of use:
- DP systems Dynamic Positioning;
- docking systems.

The DP system is intended for precise vessel docking on sea and ocean areas in actions related to sea bed exploration. Such systems usually comprise of one laser, that determine distance between docking vessel. The example is Fanbeam system of the MDL company.

Docking systems used at jetty docking of large vessels and usually comprise of two lasers located at jetty and giving distance and speed of the vessel docking at jetty, for example Smartdock of the Trelleborg Marine Systems company or Berthing Aid System of the Marimatech company.

From American patent No. 5432515 known is a system, that is based on centralised architecture, where information from radars is processed by a computer and send on vessel. However no data transmission method was presented.

Solution known from the American patent description no. 6677889 contains autonomous vessel docking system based on radar system.

From next American patent description no. 7315274 known is method of relative motion measurement of two vessels with FMCW radar.

Another American patent description no. 7389735 presents system of defining vessel position according to three objects located on land.

From another American patent description no. 7561886 known is method for determining of a marine vessel with two sensors, which can only determine symbolic side line.

Known methods and systems for positioning vessels do not provide required precision and do not include vessel waterline.

The purpose of the invention is to introduce new standard of a vessel positioning, based on dispersed system of measurement sensors acting independently from each other and transmitting wirelessly measured distance values to all vessels.

The essence of the positioning system for vessels manoeuvring at port basins and internal channels according to the invention characterise with land subsystem, that comprise of at least three laser heads stationary located along shores towards water and for measuring distance of vessel both waterlines from shore, working in continuous system with frequency of approx. 50 Hz, whereas vessel waterline from the side of the shores, the vessel intend to dock to, have to be in range of at least two laser heads and the vessel opposite waterline is at least in range of one of the laser head. Another elements of land subsystem are: data transmission module, central unit, supplying box and interface. Whereas vessel subsystem contains data receiving module, central unit, user's interface, supplying box and third subsystem is wireless transmission system, with dynamically assigned time lines for data transmission from particular laser heads.

Advantageous according to the invention is, that laser heads characterise with range up to 300m and measurement precision to 0,1m, and laser beam is approx. 0,1°.

Moreover location of the laser heads and laser heads measurement direction is defined with geodetic methods and data is inputted into the system.

The laser heads emit two kinds of information packages:
a) static, emitted approximately every minute in form of information of its position, measurement direction and the laser head number,
b) dynamic emitted every second in form of distance of measured vessel and vessel speed towards laser head /1/, /2/ and /3/ with its tendency.

Data transmission system from laser heads to the vessel is at VHF frequency and it is based on so called Self-Organizad Timen Division Multiple Access (STDMA), and appropriate time slot for data transmitted from the laser heads are appointed independently by individual laser heads.

Advantageous according to the invention is, that each of the laser heads measure distance between the shore and points situated at waterline.

The system according to the invention introduces new standard of a vessel positioning, based on dispersed system of laser heads acting independently from each other, transmitting wirelessly measured distance values to all vessels. Information is processed on vessel. The laser heads are decentralised and transmit data, that is received by each vessel that is appropriately equipped. Furthermore, the system according to the invention is based on laser heads and is resistant to interferences of wireless systems data transmit to vessel. The system according to the invention appoint waterline of a vessel, so it is a real system of positioning on limited waters.

If the system is developed and widely used in various harbours, vessels will be regularly equipped with vessel subsystem and system of wireless data transfer.

The invention fills in currently present gap in this matter, offering dispersed system of defining position and speed of a vessel towards jetty on limited waters.

Presented system can fulfil said gap by introducing new standard of a vessel positioning, based on dispersed system of laser heads acting independently from each other, transmitting wirelessly measured distance values to all vessels.

The system according to the invention increase safety of manoeuvring of a vessel during docking, by providing more precise information regarding vessel position and course and speed. It cause / influence vessel manoeuvring effectiveness increase - manoeuvring will be quicker and more efficiently what allows to safe time and will influence the economics and environment protection - decreasing fuel consumption. The system increase precision in regard to defying position and speed on harbour waters. Whereas redundancies of navigation systems will cause releasing from GPS system domination, which does not ensure required precision in defining position of a vessel.

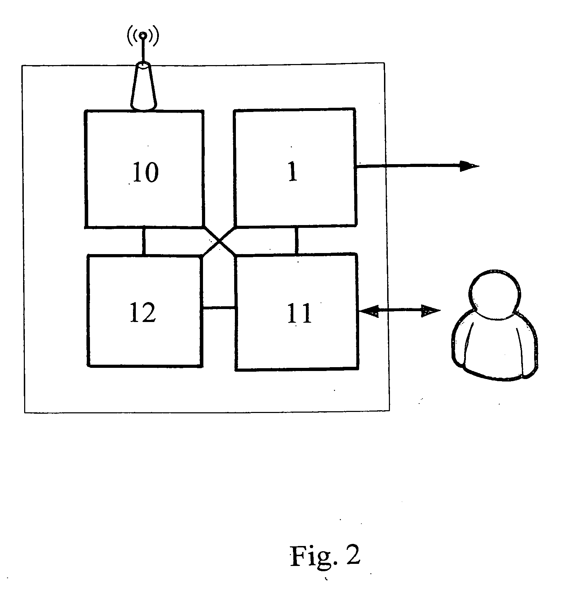

The subject of the invention is presented in examples of realisation on drawing, where on Fig. 1 presents basic architecture of the system, Fig. 2 presents land subsystem, Fig. 3 presents vessel subsystem, Fig. 4 presents data transmission chart from heads to vessel.

The system of vessel positioning 5 manoeuvring at harbour waters during approaching jetty, contains land subsystem, vessel subsystem and wireless transmission system, with dynamically allocated time lines for data transmission from particular laser heads 1, 2, 3 and 4.

Land system, presented on Fig. has dispersed character and contains four independent laser detectors, placed in laser heads 1, 2, 3 and 4, located stationary along shores. On laser heads 1, 2, 3 and 4 mirrorless impulse lasers are installed - not requiring special surfaces or mirrors do deflect the beam. The laser detectors have maximal range of approx. 300m, precision approx. 0,1m and beam width approximately 0,1°. Beside the laser detector each head contain supplying box 12, central unit 11, that constitute computer and wireless data transmission module 10. The laser heads 1, 2, 3 and 4 are placed on jetties and are directed towards water. Location of laser heads 1, 2, 3, 4 and direction of laser measurement are defined with geodetic methods and inputted into computer 11. The laser heads 1, 2, 3 and 4 make measurements in continuous system with frequency of approximately 50Hz and transmit two package of information. One package is static information transmitted every minute, in form of information regarding its position, measurement direction and the head number. The second information package is dynamic information transmitted every second, giving information on vessel distance - if measurement was made - and vessel speed in relation to the laser head with its tendency.

The laser heads 1, 2, 3 and 4 make constant measurements of vessel 5 waterline 6 in time and emit registered distance from vessel subsystem of manoeuvring vessel 5.

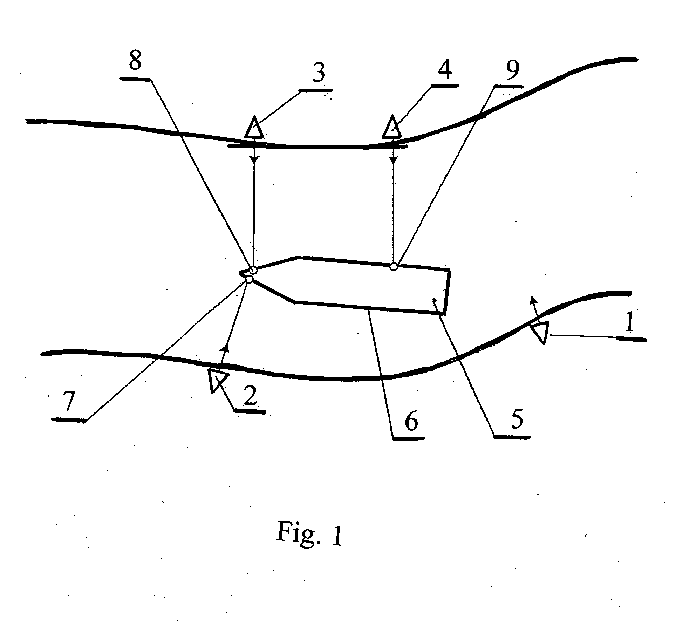

Each of both jetties contain two laser heads 1, 2, 3 and 4 that measure distance from each jetty to vessel 5 waterline 6. On jetty, the vessel 5 approach are two laser heads 3 and 4 located and on opposite jetty are also placed two laser heads 1 and 2. Whereas measured points 7, 8 and 9 are located at vessel 5 waterline 6, what is presented on Fig. 1.

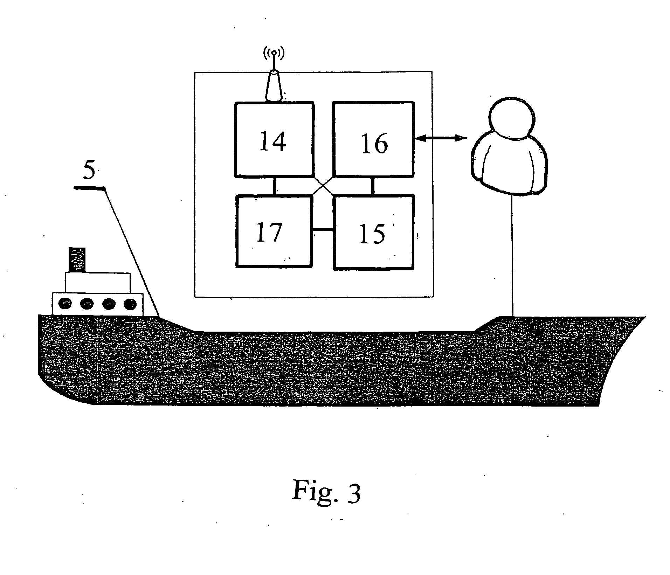

The vessel subsystem, presented on Fig. 3, contains receiver 14 as data reception module, computer as main unit 15, display with appropriate user interface 16 and supply box 17, that can be replaced with vessel supply system. The purpose of the main unit 15 is to process signals from particular laser heads 1, 2, 3, and 4, presenting them on graphic interface 16 and vessel 5 location with appropriate geometry of defining vessel location (x, y, course) and performing so called waterline 6 location optimalisation with optimalisation methods based on gradient method and genetic algorithm, as not always vessel location towards land subsystem guarantee complete solution and finding current waterline 6 location. The vessel subsystem can be constructed as portable or stationary. The portable system can be brought onboard vessel 5 by docking pilot for the time of harbour manoeuvres. The vessel subsystem can be composed into vessel architecture of ECDIS map navigation system. Communication and data exchange inside vessel network can be with standard maritime communication protocol NMEA 0183.

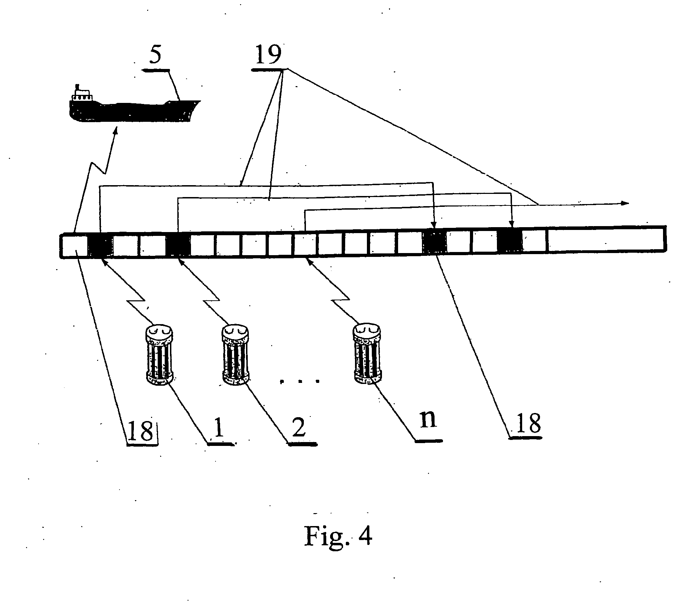

The data transmission system, presented on Fig. 4, is at VHF frequency and is based on so called Self-Organized Time Division Multiple Access (STDMA). The transmission is conducted in time lines so called slots. During transmission successive time slot is reserved for next transmission. Vessel 5 receives transmission from all heads in communication system range. The transmission system does not require control station nor any main unit. Appropriate time slots for data transmitted from laser heads 1, 2, 3, and 4 are individually allocated by particular laser heads.

## Claims

1. The Positioning system for vessels manoeuvring in port basins and internal channels containing radars or two laser detectors from which information is processed by the main computer and transmitted to vessel, wherein contains the land subsystem, that comprise of stationary located along shores and towards water at least three laser heads /1/, /2/, /3/, for measuring distance of vessel /5/ both waterlines /6/ from shores, working in continuous system with frequency of approx. 50 Hz, whereas vessel /5/ waterline /6/ from the side of the jetty, the vessel /5/ intend to dock to, have to be in range of at least two laser heads /1/ and /2/, and the vessel /5/ opposite waterline /6/ is at least in range of one of the laser head /3/, next land subsystem elements are: data transmission module /10/, main unit /11/, supply box /12/ and interface /13/, and vessel subsystem contains data reception module /14/ main unit /15/ user interface /16/ and supply box /17/, whereas third subsystem is wireless transmission system, with dynamically allocated time lines for data transmission from particular laser heads /1/, /2/, and /3/.

2. The system according to Claim 1, wherein the laser heads /1/, /2/ and /3/ characterise with range up to 300m and measurement precision to 0,1m, and laser beam is approx. 0,1°.

3. The system according to Claim 1, wherein the location of the laser heads and laser heads /1/, /2/ and /3/ measurement direction is defined with geodetic methods and data is inputted into the system.

4. The system according to Claim 1, wherein the laser heads /1/, /2/ and /3/ emit two information packages:
a) static, emitted approximately every minute in form of information of its position, measurement direction and the laser head number,
b) dynamic, emitted every second in form of distance of measured vessel and vessel speed towards laser head /1/, /2/ and /3/ with its tendency.

5. The system according to Claim 1, wherein the data transmission system from laser heads /1/, /2/ and /3/ to the vessel is at VHF frequency and it is based on so called Self-Organizad Timen Division Multiple Access (STDMA), and appropriate time slots for data transmitted from the laser heads /1/, /2/ and /3/ are appointed independently by individual laser heads /1/, /2/ and /3/.

6. The system according to Claim 1, wherein each of the laser heads /1/, /2/ and /3/ measure distance between shore and points located at vessel /5/ waterline /6/.
